# FASCICULE DE BREVET EUROPEEN

(11) **EP 3 857 090 B1**
(45) Date de publication et mention de la délivrance du brevet: **31.08.2022**
(21) Numéro de dépôt: 19766045.9
(22) Date de dépôt: 16.09.2019
(51) Int. Cl.: F16D 13/52, F16D 21/06, F16D 25/0638, F16D 25/10

(54) **MECANISME A DOUBLE EMBRAYAGE HUMIDE COMPACT**
KOMPAKTER DOPPELNASSKUPPLUNGSMECHANISMUS
COMPACT DOUBLE WET CLUTCH MECHANISM

(30) Priorité: 27.09.2018 FR 1858903
(43) Date de publication de la demande: 04.08.2021
(73) Titulaire: VALEO EMBRAYAGES, 80009 Amiens (FR)
(72) Inventeur: DOLE, Arnaud, 95892 CERGY PONTOISE (FR); VUAROQUEAUX, Guillaume, 95892 CERGY PONTOISE (FR); THIBAUT, François, 95892 CERGY PONTOISE (FR)
(86) Numéro de dépôt international: PCT/EP2019/074706
(87) Numéro de publication internationale: WO 2020/064400

(56) Documents cités:
- DE-A1-102015 222 191
- DE-A1-102015 226 272
- DE-A1-102015 226 273
- DE-A1-102016 011 904

## Description

### Domaine technique

La présente invention concerne un mécanisme à double embrayage humide compact tel qu'utilisé dans le domaine de l'automobile. L'invention concerne aussi un système de transmission intégrant un tel mécanisme à double embrayage.

### État de la technique antérieure

On connait des mécanismes à double embrayage humide comprenant un premier et un deuxième embrayages ainsi qu'un premier et un deuxième actionneurs permettant de générer un effort pour configurer respectivement le premier et le deuxième embrayages dans une configuration embrayée ou débrayée. L'effort généré au niveau de chaque actionneur est transmis à l'embrayage correspondant par l'intermédiaire d'un organe de transmission de force. Ainsi, le déplacement de l'actionneur est transmis à l'organe de transmission de force correspondant qui, à son tour, déplace des premiers éléments de friction, par exemple des disques de friction, par rapport à des deuxièmes éléments de friction de l'embrayage correspondant, par exemple des flasques, afin de le configurer dans l'une ou l'autre des configurations citées.

De manière connue, si l'actionneur est mis en œuvre afin de pousser l'organe de transmission de force, le mouvement rétrograde dudit actionneur est généré par une rondelle élastique permettant de générer un effort suffisant pour rétablir l'actionneur et l'embrayage correspondant dans leurs configurations initiales. On connait le document DE 10 2014 219 969 A1 dans lequel chaque embrayage est contraint par une rondelle élastique de type Belleville et située entre un porte-disques de sortie couplée en rotation à un arbre d'entrée moteur d'une part et à des premiers éléments de friction de chaque embrayage d'autre part. L'inconvénient de cette architecture de mécanisme d'embrayage réside dans l'encombrement axial imposé par les rondelles élastiques de chaque embrayage.

Afin de réduire l'encombrement axial des mécanismes d'embrayage, on connait le document EP0945636A2 dans lequel le mécanisme d'embrayage humide met en œuvre des ressorts élastiques au niveau des premiers et deuxièmes éléments de friction de chaque embrayage. Les ressorts élastiques sont implantés axialement entre les faces de frictions et radialement au niveau de la cannelure du porte-disques d'entrée. L'inconvénient de cette architecture de mécanisme d'embrayage réside dans l'encombrement radial imposé par les ressorts élastiques de l'embrayage embrayage, conduisant à un surdimensionnement radial du mécanisme d'embrayage humide. Un autre mécanisme à double embrayage humide est connu du document DE 10 2015 226272 A1.

La présente invention a pour objet de répondre au moins en grande partie aux problèmes précédents et de conduire en outre à d'autres avantages.

L'invention a notamment pour but d'apporter une solution simple, efficace et économique à ce problème.

Par exemple, un but de la présente invention est de réduire l'encombrement axial d'un tel mécanisme d'embrayage humide. Un autre but de la présente invention est de réduire l'encombrement radial d'un tel mécanisme d'embrayage humide.

Dans ce but, l'invention propose un mécanisme à double embrayage humide destiné à être installé entre un moteur et une transmission de véhicule automobile, comprenant :
- un premier embrayage et un deuxième embrayage respectivement de type multidisques en rotation autour d'un axe de rotation O, commandés pour accoupler sélectivement un arbre menant à un premier arbre mené et à un deuxième arbre mené par l'intermédiaire d'un porte-disques d'entrée de couple commun, le premier embrayage étant disposés radialement au delà du deuxième embrayage ;
- un système de commande d'embrayage comprenant un premier et un deuxième pistons d'actionnement agencés pour commander les premier et deuxième embrayages ;
- un premier dispositif de rappel élastique du premier piston d'actionnement en appui sur le porte-disques d'entrée,
- un deuxième dispositif de rappel élastique du deuxième piston d'actionnement en appui sur le porte-disques d'entrée, et
- un palier de guidage supportant le porte-disques d'entrée par rapport au système d'actionnement,
les premier et deuxième embrayages, les premier et deuxième dispositifs de rappel élastique et le palier de guidage étant concentriques et imbriqués radialement au sein du porte-disques d'entrée.

Ce mécanisme à double embrayage humide, selon l'invention, présente l'avantage, grâce à l'imbrication des dispositifs de rappel élastique et du palier de guidage au sein du porte-disques d'entrée d'être compact axialement. L'implantation des dispositifs de rappel élastique au sein du porte-disques d'entrée présente également l'avantage de réduire l'encombrement radial des premier et deuxième embrayages.

De préférence, le mécanisme à double embrayage humide peut comprendre un plan P, orthogonal à l'axe O, traversant le palier de guidage, les premier et deuxième embrayages ainsi que les premier et deuxième dispositifs de rappel élastique. Cette architecture comprenant un tel plan P présente l'avantage de réduire l'encombrement axial du mécanisme à double embrayage humide.

Avantageusement, le palier de guidage peut être de type roulement à billes, par exemple un roulement à billes à contact oblique.

De préférence, le plan P peut passer par le centre des billes du palier de guidage.

L'intégration du palier de guidage de type roulement à billes au sein du porte-disques d'entrée permet une reprise des efforts axiaux au sein du mécanisme à double embrayage humide sans altérer l'encombrement axial dudit mécanisme.

L'invention peut présenter l'une ou l'autre des caractéristiques décrites ci-dessous combinées entre elles ou prises indépendamment les unes des autres :
- les premier et deuxième embrayages, les premier et deuxième dispositifs de rappel élastique et le palier de guidage peuvent être imbriqués les uns dans les autres au sein du porte-disques d'entrée ;
- le palier de guidage peut comporter des billes disposées radialement entre une bague extérieure de guidage et une bague intérieure de guidage ;
- le porte-disques d'entrée de couple peut être agencé pour être lié en rotation avec l'arbre menant selon l'axe de rotation O par l'intermédiaire d'un moyeu d'entrée ;
- les premier et deuxième embrayages peuvent comprendre chacun un ensemble multidisques composé de flasques et de disques de friction ;
- le palier de guidage peut être disposé radialement à l'intérieur du porte-disques d'entrée ;
- le palier de guidage peut être inséré dans une portion d'appui cylindrique du porte-disques d'entrée et configuré pour supporter les efforts radiaux du mécanisme d'embrayage humide ;
- le premier dispositif de rappel élastique peut être formé par une série de ressorts hélicoïdaux répartis angulairement autour de l'axe O ;
- le deuxième dispositif de rappel élastique peut être formé par une série de ressorts hélicoïdaux répartis angulairement autour de l'axe O ;
- le premier dispositif de rappel élastique peut être formé par une rondelle élastique annulaire ;
- le deuxième dispositif de rappel élastique peut être formé par une rondelle élastique annulaire ;
- les premier et deuxième embrayages peuvent être en appui sur le système de commande par l'intermédiaire d'organes de transmission de force ;
- les premier et deuxième dispositifs de rappel élastique peuvent comprendre une plaque d'appui commune en appui sur le porte-disques d'entrée ;
- la première série de ressorts hélicoïdaux peut être en appui sur le premier organe de transmission de force par l'intermédiaire d'une première plaque annulaire, la deuxième série de ressorts hélicoïdaux peut être en appui sur le deuxième organe de transmission de force par une deuxième plaque annulaire, et une plaque d'appui commune solidarise entre-elles les premiers et deuxième série de ressorts hélicoïdaux ;
- les première et deuxième plaques annulaires peuvent être retenues axialement sur la plaque d'appui commune par des moyens d'encliquetage ;
- le premier et le deuxième dispositif de rappel élastique peuvent comprendre respectivement une première série de ressorts hélicoïdaux répartis angulairement autour de l'axe O étant en appui sur le premier organe de transmission de force par l'intermédiaire d'une première plaque annulaire, une deuxième série de ressorts hélicoïdaux répartis angulairement autour de l'axe O étant en appui sur le deuxième organe de transmission de force par l'intermédiaire d'une deuxième plaque annulaire, et une plaque d'appui commune solidarisant entre-elles les première et deuxième séries de ressorts hélicoïdaux ;
- le système de commande peut comprendre une portée d'extension axiale s'étendant en direction du porte-disques d'entrée, le palier de guidage étant disposé radialement à l'extérieur de la portée d'extension axiale ;
- les premier et deuxième dispositifs de rappel élastique peuvent être logés dans un enfoncement formé dans le porte-disques d'entrée ;
- le premier organe de transmission de force peut passer au travers du deuxième organe de transmission de force pour appuyer sur la première plaque annulaire ;
- des pattes d'appui formées sur le premier organe de transmission de force peuvent passer au travers d'orifices aménagés dans le deuxième organe de transmission de force ;
- les pattes d'appui formées sur le premier organe de transmission de force peuvent être réparties angulairement autour de l'axe O.
- le porte-disques d'entrée peut comprendre une portion d'appui cylindrique dans laquelle est insérée le palier de guidage commun aux premier et deuxième embrayages ;
- le premier embrayage peut comprendre un premier porte-disques de sortie de couple agencé pour être lié en rotation avec le premier arbre mené par l'intermédiaire d'un moyeu de sortie ;
- le deuxième embrayage peut comprendre un deuxième porte-disques de sortie de couple agencé pour être lié en rotation avec le deuxième arbre mené par l'intermédiaire d'un moyeu de sortie.
- selon une première variante, le deuxième dispositif de rappel élastique peut être disposé radialement au delà du premier dispositif de rappel élastique ;
- selon une deuxième variante distincte de la première variante, le premier dispositif de rappel élastique peut être disposé radialement au delà du deuxième dispositif de rappel élastique ;

L'invention sera mieux comprise à la lecture de la description qui va suivre, donnée uniquement à titre d'exemple et faite en se référant aux dessins annexés dans lesquels :
- la figure 1 est une vue en coupe axiale d'un mécanisme à double embrayage humide selon un premier mode de mise en œuvre de l'invention ;
- la figure 2 est une vue en écorché isométrique du mécanisme à double embrayage humide selon le premier mode de mise en œuvre de l'invention de la figure 1 ;
- la figure 3 est une vue de face du dispositif de rappel élastique seul selon le premier mode de mise en œuvre de l'invention de la figure 1 ;
- la figure 4 est une vue de coté du dispositif de rappel élastique seul selon le premier mode de mise en œuvre de l'invention de la figure 1 ;

Dans la suite de la description et des revendications, on utilisera à titre non limitatif et afin d'en faciliter la compréhension, les termes « avant » ou « arrière » selon la direction par rapport à une orientation axiale déterminée par l'axe O principal de rotation de la transmission du véhicule automobile et les termes « intérieur / interne » ou « extérieur / externe » par rapport à l'axe O et suivant une orientation radiale, orthogonale à ladite orientation axiale.

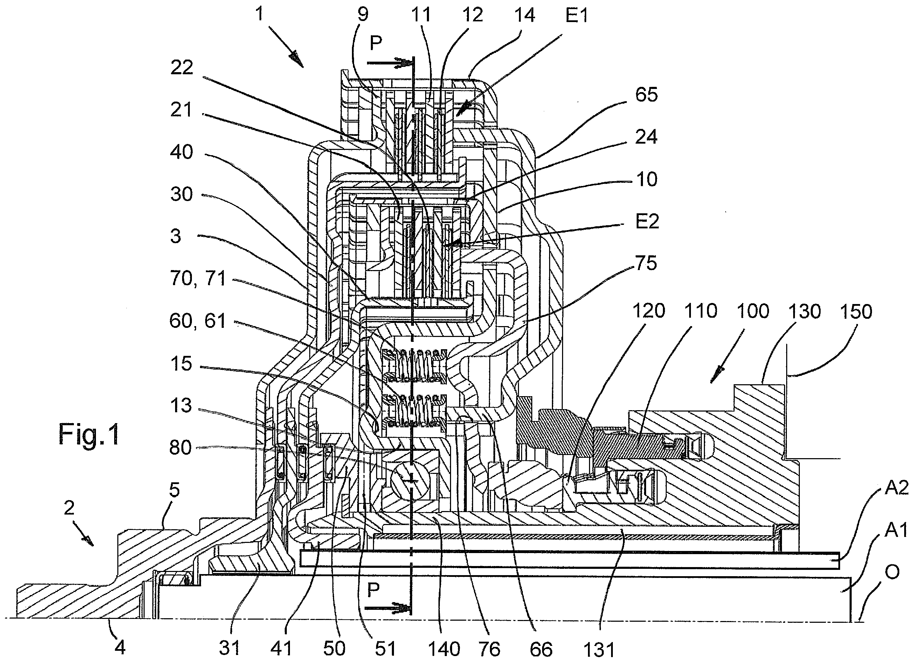

On a représenté sur la figure 1 un premier mode de mise en œuvre d'un mécanisme à double embrayage humide 1 pour système de transmission de couple.

Le mécanisme à double embrayage humide est de type multidisques et présente un axe principal de rotation O.

Le mécanisme à double embrayage humide 1 comporte autour de l'axe O au moins un élément d'entrée 2 qui est lié en rotation à un arbre menant (non représenté). L'élément d'entrée 2 est situé à l'arrière du mécanisme à double embrayage humide 1.

Dans le premier mode de mise en œuvre, l'élément d'entrée 2 présentant globalement une forme en « L », comporte une portion annulaire d'orientation radiale formée par un voile 3 d'entrée et une partie d'orientation axiale formée par un moyeu 4. Le voile 3 d'entrée et le moyeu 4 d'entrée sont solidaires et soudés ensemble par soudage laser par transparence.

Le moyeu 4 est agencé radialement à l'intérieur par rapport au voile 3 d'entrée.

Le moyeu 4 d'entrée est par exemple lié en rotation par l'intermédiaire des cannelures 5 à la sortie d'un dispositif d'amortissement (tel qu'un double volant amortisseur, etc.) dont l'entrée est liée, par l'intermédiaire notamment d'un volant moteur, à l'arbre menant formé par un vilebrequin qu'entraîne en rotation un moteur équipant le véhicule automobile.

Le voile 3 d'entrée comporte, à son extrémité radiale externe d'orientation axiale, des dents 9 qui s'étendent radialement vers l'extérieur et qui s'appuient sur un porte-disques d'entrée 10 de couple.

Le mécanisme à double embrayage humide 1 est commandé pour accoupler sélectivement ledit arbre menant à un premier arbre A1 mené et à un deuxième arbre A2 mené reliés à une boîte de vitesses équipant le véhicule automobile.

De préférence, le premier arbre A1 mené et le deuxième arbre A2 mené sont coaxiaux. Le premier arbre A1 mené est entraîné en rotation lorsque ledit premier embrayage E1 est fermé et le deuxième A2 arbre mené est entraîné en rotation lorsque ledit deuxième embrayage E2 est fermé.

Le mécanisme à double embrayage humide 1 comporte un premier embrayage E1 et un deuxième embrayage E2, qui sont respectivement de type multidisques, ainsi qu'un système de commande 100 agencé pour embrayer ou débrayer lesdits premier et deuxième embrayages E1, E2. Le système de commande 100 est fixé à un carter de transmission 150.

Comme illustré sur la figure 1, le premier embrayage E1 est disposé radialement au dessus du deuxième embrayage E2.

Le mécanisme à double embrayage humide 1 est commandé hydrauliquement par l'intermédiaire d'un fluide sous pression, généralement de l'huile. Le système de commande 100 comprend :
- un premier piston d'actionnement 110 agencé pour configurer le premier embrayage E1 dans une configuration comprise entre la configuration embrayée et la configuration débrayée ;
- un deuxième piston d'actionnement 120 agencé pour configurer le deuxième embrayage E2 dans une configuration comprise entre la configuration embrayée et la configuration débrayée ;
- un carter 130 dans lequel sont logés au moins (en partie) le premier ou le deuxième piston d'actionnement 110, 120.

Les premier et deuxième embrayages E1, E2 sont en appui sur le système de commande 100 par l'intermédiaire d'organes de transmission de force 65, 75.

Par exemple, le système d'actionnement peut comprendre une portée d'extension axiale 140 intégrée dans le carter 130 et s'étendant axialement en direction de l'élément d'entrée 2. La portée d'extension axiale 140 est agencée pour supporter les premier et deuxième embrayages.

Un palier de guidage 80 est disposé entre la portée d'extension axiale 140 et le porte-disque d'entrée 10. Le palier de guidage 80 est de type roulement à billes et guide en rotation les premier et deuxième embrayages E1, E2 par rapport au système de commande 100. Le palier de guidage 80 est en appui axial sur le porte-disques d'entrée 10. Sur sa périphérie interne, le porte-disques d'entrée 10 comprend une portion d'appui cylindrique 13 dans laquelle est inséré la bague extérieure du palier de guidage 80. L'intégration du palier de guidage au sein du porte-disques d'entrée 10 permet une reprise des efforts axiaux sans altérer l'encombrement axial du mécanisme à double embrayage humide.

Le palier de guidage 80 est commun aux premier et deuxième embrayages E1 et E2.

Par exemple, le palier de guidage 80 est un roulement à billes à contact oblique.

Comme illustré sur la figure 1, le mécanisme à double embrayage humide 1 comprend un premier dispositif de rappel élastique 60 du premier piston d'actionnement 110 et un deuxième dispositif de rappel élastique 70 du deuxième piston d'actionnement 120. Les premier et deuxième dispositifs de rappel élastique 60, 70 sont en appui sur le porte-disques d'entrée 10 et sont notamment logés dans un enfoncement 15.

L'enfoncement 15 formé dans le porte-disques d'entrée 10 est aménagé sur un diamètre situé au-delà de la portée portion d'appui cylindrique 13.

Chacun des dispositifs de rappel élastique 60, 70 permet de générer un effort axial suffisant pour rétablir le piston d'actionnement et l'embrayage correspondant dans la configuration initiale dite débrayée.

Le premier dispositif de rappel élastique 60 comprend une première série de ressorts hélicoïdaux 61 répartis angulairement autour de l'axe O agencé pour venir appui sur un premier organe de transmission de force 65. Le premier organe de transmission de force 65 est intercalé axialement entre le premier embrayage E1 et le premier piston d'actionnement 110.

Le deuxième dispositif de rappel élastique 70 comprend une deuxième série de ressorts hélicoïdaux 71 répartis angulairement autour de l'axe O agencé pour venir appui sur un deuxième organe de transmission de force 75. Le deuxième organe de transmission de force 75 est intercalé axialement entre le premier embrayage E1 et le premier piston d'actionnement 120.

En variante non représentée, chacun des dispositifs de rappels élastiques 60, 70 peut être formé par une rondelle élastique annulaire disposée en lieu et place de la série de ressorts hélicoïdaux. La rondelle élastique annulaire peut appuyer directement sur l'organe de transmission de force.

Dans le premier mode de mise en œuvre de l'invention, le deuxième dispositif de rappel élastique 70 est disposé radialement au delà du premier dispositif de rappel élastique 60. Les premier et deuxième dispositifs de rappel élastique sont des dispositifs distincts.

Afin de réduire l'encombrement axial du mécanisme à double embrayage humide 1, les premier et deuxième embrayages E1, E2, les premier et deuxième dispositifs de rappel élastique 60, 70 et le palier de guidage 80 sont concentriques et sont imbriqués radialement au sein du porte-disques d'entrée 10.

Notamment, un plan P-P, orthogonal à l'axe O, traverse géométriquement le palier de guidage 80, les premier et deuxième embrayages E1, E2 ainsi que les premier et deuxième dispositifs de rappel élastique 60,70. Le plan P-P passe par le centre des billes du palier de guidage 80.

De manière à réduire la compacité axiale, le premier organe de transmission de force 65 passe au travers d'orifices 76 ménagés dans le deuxième organe de transmission de force 75 pour appuyer sur le premier dispositif de rappel élastique. Le premier organe de transmission de force 65 comprend des pattes d'appui 66 formées sur sa périphérie interne. Les pattes d'appui 66 sont réparties angulairement autour de l'axe O et passent ainsi au travers au travers des orifices 76 du deuxième organe de transmission de force.

Une bague de lubrification 50 est également disposée radialement entre la portée d'extension axiale 140 et le porte-disques d'entrée 10. La bague de lubrification 50 est en appui axial sur le palier de guidage 80. La bague de lubrification 50 est retenue axialement par un anneau fendu emmanché dans une gorge aménagée sur la portée d'extension axiale 140 du carter 130.

Avantageusement, la bague de lubrification 50 comprend des conduites de lubrification 51 traversant radialement de part en part la bague et débouchant sur le pourtour extérieur. Les conduites de lubrification 51 sont orientées radialement en direction des embrayages E1 et E2.

Le carter 130 du système de commande 100 comprend des conduites d'alimentation en fluide de refroidissement 131 qui communiquent directement avec les conduites de lubrification 51. La bague de lubrification 50 canalise ainsi le fluide de refroidissement en provenance du système d'actionnement en direction des premier et deuxième embrayages E1, E2 et favorise leur lubrification.

L'ensemble multidisques du premier embrayage E1 comporte des flasques 11 liés en rotation au porte-disque d'entrée 10 et des disques de friction 12 liés en rotation à un premier porte-disques de sortie 30 de couple. Les disques de friction 12 sont, unitairement, axialement interposés entre deux flasques 11 successifs.

Le porte-disques de sortie 30 de couple du premier embrayage E1 est lié en rotation par engrènement avec les disques de friction 12 et par une liaison cannelée avec ledit premier arbre A1 mené. Le porte-disques de sortie 30 comprend un moyeu de sortie 31 connecté à l'arbre mené A1.

L'ensemble multidisques du deuxième embrayage E2 comporte des flasques 21 liés en rotation au porte-disque d'entrée 10 et des disques de friction 22 liés en rotation à un deuxième porte-disque de sortie 40 de couple.

Le porte-disque de sortie 40 de couple du deuxième embrayage E2 est lié en rotation par engrènement avec les disques de friction 22 et par une liaison cannelée avec ledit deuxième arbre A2 mené. Le porte-disques de sortie 40 comprend un moyeu de sortie 41 connecté à l'arbre mené A2.

Le porte-disque d'entrée 10 de couple est commun au premier et au deuxième embrayage E1 et E2. Le porte-disques d'entrée 10 comporte, en outre, un porte-disque extérieur 14 du premier embrayage E1 et un porte-disque intérieur 24 du deuxième embrayage E2.

Le porte-disque extérieur 14 du premier embrayage E1 comprend notamment une extension axiale agencée pour recevoir l'ensemble multidisques du premier embrayage. L'extension axiale forme une cannelure interne recevant les flasques 11 de l'ensemble multidisque du premier embrayage E1.

Le porte-disque intérieur 24 du deuxième embrayage E2 comprend une extension axiale agencée pour recevoir l'ensemble multidisques du deuxième embrayage. L'extension axiale forme une cannelure interne recevant les flasques 21 de l'ensemble multidisque du deuxième embrayage E2.

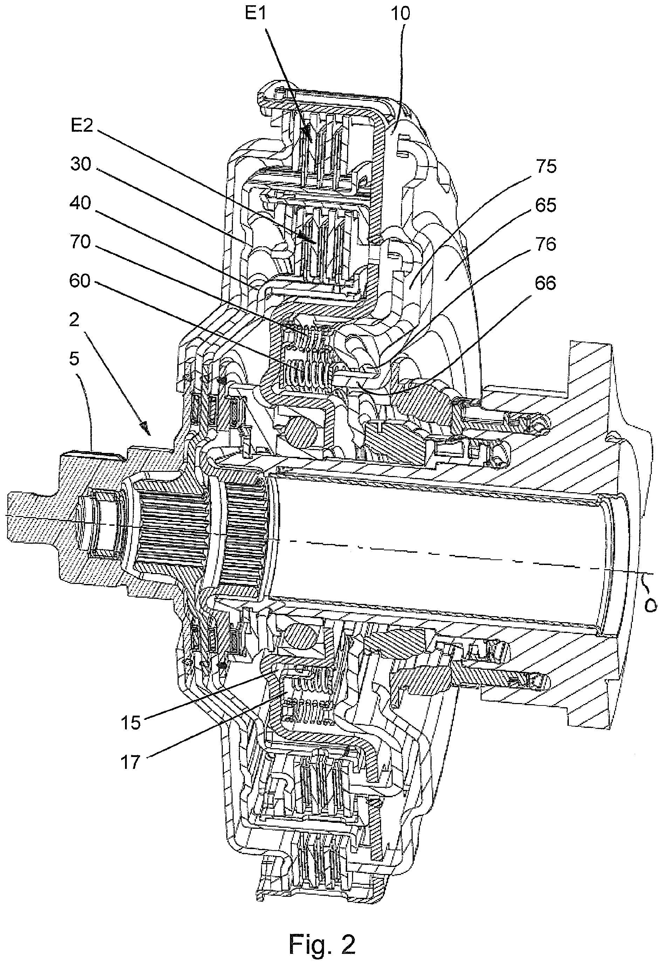

On a représenté sur les figures 2 à 4 un deuxième mode de mise en œuvre d'un mécanisme à double embrayage humide 1 sensiblement similaire au premier mode de mise en œuvre à l'exception du fait que les premier et deuxième dispositifs de rappel élastique comprennent une pièce commune de sorte que les dispositifs ne sont pas distincts.

Le premier dispositif de rappel élastique 60 comprend une première série de ressorts hélicoïdaux 61 répartis angulairement autour de l'axe O venant en appui sur le premier organe de transmission de force par l'intermédiaire d'une première plaque annulaire 62,

le deuxième dispositif de rappel élastique 70 comprend une deuxième série de ressorts hélicoïdaux 71 répartis angulairement autour de l'axe O venant en appui sur le deuxième organe de transmission de force par l'intermédiaire d'une deuxième plaque annulaire 72.

Une plaque d'appui commune 17 solidarise entre-elles les première et deuxième séries de ressorts hélicoïdaux 61, 71.

Dans ce deuxième mode de mise en œuvre de l'invention, les premier et deuxième embrayages E1, E2, les premier et deuxième dispositifs de rappel élastique 60, 70 et le palier de guidage 80 sont également concentriques et sont imbriqués radialement au sein du porte-disques d'entrée 10.

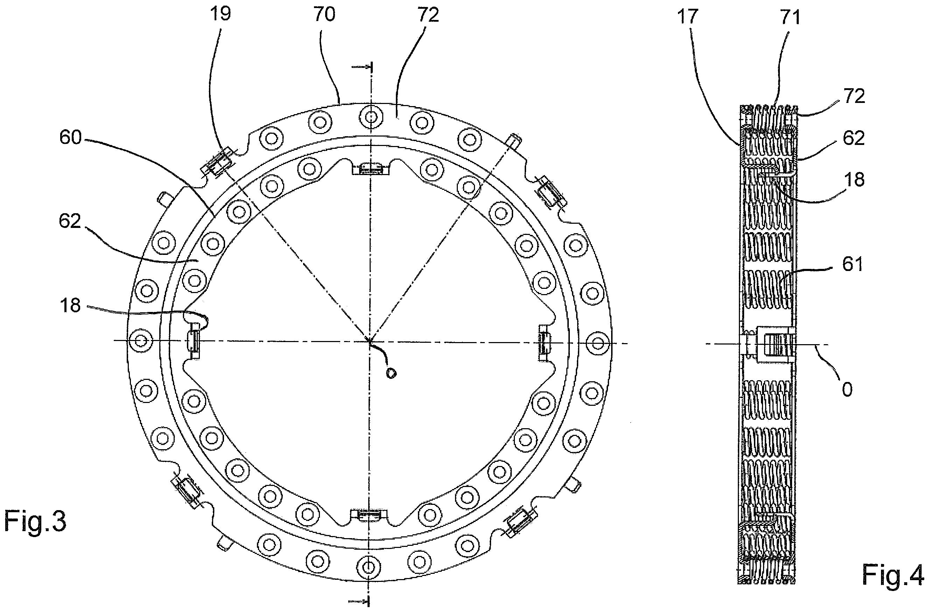

On a représenté sur les figures 3 et 4 les dispositifs de rappel élastique 60, 70 selon le deuxième mode de mise en œuvre de l'invention. Les première et deuxième plaques annulaires 62, 72 peuvent être retenues axialement sur la plaque d'appui commune 17 par des moyens d'encliquetage 18, 19. Les moyens d'encliquetage comprennent des pattes repliées et formées sur la plaque d'appui commune 17. Ces pattes repliées sont insérées dans des logements complémentaires formés sur les première et deuxième plaques d'appui.

L'invention n'est pas limitée aux exemples de mise en œuvre qui viennent d'être décrit. Le mécanisme à double embrayage humide selon l'invention peut comprendre des premier et deuxième embrayages, des premier et deuxième dispositifs de rappel élastique et un palier de guidage imbriqués radialement au sein d'un porte-disques d'entrée et dans lequel le premier dispositif de rappel élastique est disposé radialement au delà du deuxième dispositif de rappel élastique.

## Revendications

1. Mécanisme à double embrayage humide (1) destiné à être installé entre un moteur et une transmission de véhicule automobile, comprenant :
- un premier embrayage (E1) et un deuxième embrayage (E2) respectivement de type multidisques en rotation autour d'un axe de rotation (O), commandés pour accoupler sélectivement un arbre menant à un premier arbre mené (A1) et à un deuxième arbre mené (A2) par l'intermédiaire d'un porte-disques d'entrée (10) de couple commun, le premier embrayage (E1) étant disposés radialement au delà du deuxième embrayage (E2) ;
- un système de commande (100) d'embrayage comprenant un premier et un deuxième pistons d'actionnement (110, 120) agencés pour commander les premier et deuxième embrayages (E1, E2) ;
- un premier dispositif de rappel élastique (60) du premier piston d'actionnement en appui sur le porte-disques d'entrée,
- un deuxième dispositif de rappel élastique (70) du deuxième piston d'actionnement en appui sur le porte-disques d'entrée, et
- un palier de guidage (80) supportant le porte-disques d'entrée (10) par rapport au système d'actionnement (100),
**caractérisé en ce que** les premier et deuxième embrayages, les premier et deuxième dispositifs de rappel élastique et le palier de guidage sont concentriques et imbriqués radialement au sein du porte-disques d'entrée (10).

2. Mécanisme à double embrayage humide (1) selon la revendication 1, dans lequel le palier de guidage (80) est de type roulement à billes.

3. Mécanisme à double embrayage humide (1) selon la revendication 2, dans lequel un plan (P), orthogonal à l'axe (O) et passant par le centre des billes (81) du palier de guidage (80), traverse les premier et deuxième embrayages (E1, E2) ainsi que les premier et deuxième dispositifs de rappel élastique (60, 70).

4. Mécanisme à double embrayage humide (1) selon l'une quelconque des revendications 1 à 3, dans lequel chacun des premier et deuxième dispositifs de rappel élastique (60, 70) sont formés par une série de ressorts hélicoïdaux répartis angulairement autour de l'axe (O).

5. Mécanisme à double embrayage humide (1) selon l'une quelconque des revendications 1 à 4, dans lequel les premier et deuxième dispositifs de rappel élastique (60, 70) comprennent une plaque d'appui commune (17) en appui sur le porte-disques d'entrée (10).

6. Mécanisme à double embrayage humide (1) selon la revendication précédente, dans lequel la première série de ressorts hélicoïdaux (61) est en appui sur le premier organe de transmission de force (65) par l'intermédiaire d'une première plaque annulaire (62), la deuxième série de ressorts hélicoïdaux (71) est en appui sur le deuxième organe de transmission de force (75) par une deuxième plaque annulaire (72), et la plaque d'appui commune (17) solidarise entre-elles les première et deuxième séries de ressorts hélicoïdaux.

7. Mécanisme à double embrayage humide (1) selon la revendication précédente, dans lequel les première et deuxième plaques annulaires (62, 72) sont retenues axialement sur la plaque d'appui commune (17) par des moyens d'encliquetage (18, 19).

8. Mécanisme à double embrayage humide (1) selon l'une quelconque des revendications 1 à 7, dans lequel les premier et deuxième embrayages (E1, E2) sont en appui sur le système de commande (100) par l'intermédiaire d'organes de transmission de force (65, 75),

9. Mécanisme à double embrayage humide (1) selon la revendication précédente, dans lequel le deuxième dispositif de rappel élastique (70) est disposé radialement au delà du premier dispositif de rappel élastique (60).

10. Mécanisme à double embrayage humide (1) selon la revendication précédente, dans lequel le premier organe de transmission de force (65) passe au travers du deuxième organe de transmission de force (75) pour appuyer sur la première plaque annulaire.

11. Mécanisme à double embrayage humide (1) selon la revendication précédente, des pattes d'appui (66) formées sur le premier organe de transmission de force (65) passent au travers d'orifices (76) aménagés dans le deuxième organe de transmission de force (75).

12. Mécanisme à double embrayage humide (1) selon l'une quelconque des revendications précédentes, dans lequel le système de commande (100) comprend une portée d'extension axiale (140) s'étendant en direction du porte-disques d'entrée (10), le palier de guidage (80) étant disposé radialement à l'extérieur de la portée d'extension axiale.

13. Mécanisme à double embrayage humide (1) selon l'une quelconque des revendications précédentes, dans lequel les premier et deuxième dispositifs de rappel élastique (60, 70) sont logés dans un enfoncement (15) formé dans le porte-disques d'entrée (10).

14. Mécanisme à double embrayage humide (1) selon l'une quelconque des revendications 1 à 8, dans lequel le premier dispositif de rappel élastique (60) est disposé radialement au delà du deuxième dispositif de rappel élastique (70).

15. Mécanisme à double embrayage humide (1) selon l'une quelconque des revendications 1 à 3, dans lequel chacun des premier et deuxième dispositifs de rappel élastique (60, 70) sont formés par une rondelle élastique annulaire.

## Patentansprüche

1. Nasser Doppelkupplungsmechanismus (1), welcher dazu bestimmt ist, zwischen einem Motor und einem Getriebe eines Kraftfahrzeugs eingebaut zu werden, umfassend:
- eine erste Kupplung (E1) und eine zweite Kupplung (E2), die jeweils vom Typ einer um eine Drehachse (O) drehbaren Lamellenkupplung sind und so gesteuert werden, dass sie selektiv eine Antriebswelle mit einer ersten Abtriebswelle (A1) und mit einer zweiten Abtriebswelle (A2) über einen gemeinsamen Drehmomenteingangs-Lamellenträger (10) kuppeln, wobei die erste Kupplung (E1) radial außerhalb der zweiten Kupplung (E2) angeordnet ist;
- ein Kupplungssteuerungssystem (100), das einen ersten und einen zweiten Betätigungskolben (110, 120) umfasst, die dazu eingerichtet sind, die erste und die zweite Kupplung (E1, E2) zu steuern;
- eine erste elastische Rückholvorrichtung (60) für den ersten Betätigungskolben, die sich auf dem Eingangslamellenträger abstützt;
- eine zweite elastische Rückholvorrichtung (70) für den zweiten Betätigungskolben, die sich auf dem Eingangslamellenträger abstützt; und
- ein Führungslager (80), das den Eingangslamellenträger (10) in Bezug auf das Betätigungssystem (100) stützt,
**dadurch gekennzeichnet, dass** die erste und die zweite Kupplung, die erste und die zweite elastische Rückholvorrichtung und das Führungslager konzentrisch sind und innerhalb des Eingangslamellenträgers (10) radial geschachtelt angeordnet sind.

2. Nasser Doppelkupplungsmechanismus (1) nach Anspruch 1, wobei das Führungslager (80) vom Typ eines Kugellagers ist.

3. Nasser Doppelkupplungsmechanismus (1) nach Anspruch 2, wobei eine Ebene (P), die zur Achse (O) orthogonal ist und durch den Mittelpunkt der Kugeln (81) des Führungslagers (80) verläuft, die erste und die zweite Kupplung (E1, E2) sowie die erste und die zweite elastische Rückholvorrichtung (60, 70) durchquert.

4. Nasser Doppelkupplungsmechanismus (1) nach einem der Ansprüche 1 bis 3, wobei die erste und die zweite elastische Rückholvorrichtung (60, 70) jeweils von einer Reihe von Schraubenfedern gebildet werden, die winkelmäßig um die Achse (O) verteilt sind.

5. Nasser Doppelkupplungsmechanismus (1) nach einem der Ansprüche 1 bis 4, wobei die erste und die zweite elastische Rückholvorrichtung (60, 70) eine gemeinsame Stützplatte (17) umfassen, die sich auf dem Eingangslamellenträger (10) abstützt.

6. Nasser Doppelkupplungsmechanismus (1) nach dem vorhergehenden Anspruch, wobei die erste Reihe von Schraubenfedern (61) sich auf dem ersten Kraftübertragungsorgan (65) über eine erste ringförmige Platte (62) abstützt, die zweite Reihe von Schraubenfedern (71) sich auf dem zweiten Kraftübertragungsorgan (75) durch eine zweite ringförmige Platte (72) abstützt und die gemeinsame Stützplatte (17) die erste und die zweite Reihe von Schraubenfedern fest miteinander verbindet.

7. Nasser Doppelkupplungsmechanismus (1) nach dem vorhergehenden Anspruch, wobei die erste und die zweite ringförmige Platte (62, 72) durch Rastmittel (18, 19) auf der gemeinsamen Stützplatte (17) axial gehalten werden.

8. Nasser Doppelkupplungsmechanismus (1) nach einem der Ansprüche 1 bis 7, wobei sich die erste und die zweite Kupplung (E1, E2) auf dem Steuerungssystem (100) über Kraftübertragungsorgane (65, 75) abstützen.

9. Nasser Doppelkupplungsmechanismus (1) nach dem vorhergehenden Anspruch, wobei die zweite elastische Rückholvorrichtung (70) radial außerhalb der ersten elastischen Rückholvorrichtung (60) angeordnet ist.

10. Nasser Doppelkupplungsmechanismus (1) nach dem vorhergehenden Anspruch, wobei das erste Kraftübertragungsorgan (65) durch das zweite Kraftübertragungsorgan (75) hindurchführt, um auf die erste ringförmige Platte zu drücken.

11. Nasser Doppelkupplungsmechanismus (1) nach dem vorhergehenden Anspruch, wobei Stützlaschen (66), die am ersten Kraftübertragungsorgan (65) ausgebildet sind, durch Öffnungen (76) hindurchführen, die im zweiten Kraftübertragungsorgan (75) angeordnet sind.

12. Nasser Doppelkupplungsmechanismus (1) nach einem der vorhergehenden Ansprüche, wobei das Steuerungssystem (100) eine sich axial erstreckende Lagerfläche (140) umfasst, die sich in Richtung des Eingangslamellenträgers (10) erstreckt, wobei das Führungslager (80) radial außerhalb der sich axial erstreckenden Lagerfläche angeordnet ist.

13. Nasser Doppelkupplungsmechanismus (1) nach einem der vorhergehenden Ansprüche, wobei die erste und die zweite elastische Rückholvorrichtung (60, 70) in einer Vertiefung (15) aufgenommen sind, die im Eingangslamellenträger (10) ausgebildet ist.

14. Nasser Doppelkupplungsmechanismus (1) nach einem der Ansprüche 1 bis 8, wobei die erste elastische Rückholvorrichtung (60) radial außerhalb der zweiten elastischen Rückholvorrichtung (70) angeordnet ist.

15. Nasser Doppelkupplungsmechanismus (1) nach einem der Ansprüche 1 bis 3, wobei die erste und die zweite elastische Rückholvorrichtung (60, 70) jeweils von einer Ringfederscheibe gebildet werden.

## Claims

1. A double wet clutch mechanism (1) intended to be installed between an engine and a transmission of a motor vehicle, comprising:
- a first clutch (E1) and a second clutch (E2) respectively of the multidisk type rotating about an axis of rotation (O) and controlled so as to selectively couple a driving shaft to a first driven shaft (A1) and to a second driven shaft (A2) via a common torque input disk-carrier (10), the first clutch (E1) being arranged radially beyond the second clutch (E2);
- a clutch control system (100) comprising first and second actuating pistons (110, 120) arranged to control the first and second clutches (E1, E2);
- a first elastic return device (60) for the first actuating piston bearing on the input disk-carrier,
- a second elastic return device (70) for the second actuating piston bearing on the input disk-carrier, and
- a guide bearing (80) supporting the input disk-carrier (10) relative to the actuating system (100),
**characterized in that** the first and second clutches, the first and second elastic return devices and the guide bearing are concentric and nested radially within the input disk-carrier (10).

2. The double wet clutch mechanism (1) as claimed in claim 1, in which the guide bearing (80) is of the ball bearing type.

3. The double wet clutch mechanism (1) as claimed in claim 2, in which a plane (P), orthogonal to the axis (O) and passing through the center of the balls (81) of the guide bearing (80), traverses the first and second clutches (E1, E2) and also the first and second elastic return devices (60, 70).

4. The double wet clutch mechanism (1) as claimed in any one of claims 1 to 3, in which each of the first and second elastic return devices (60, 70) is formed by a series of helical springs angularly distributed about the axis (O).

5. The double wet clutch mechanism (1) as claimed in any one of claims 1 to 4, in which the first and second elastic return devices (60, 70) comprise a common bearing plate (17) bearing on the input disk-carrier (10).

6. The double wet clutch mechanism (1) as claimed in the preceding claim, in which the first series of helical springs (61) bears on the first force transmission member (65) via a first annular plate (62), the second series of helical springs (71) bears on the second force transmission member (75) via a second annular plate (72), and the common bearing plate (17) secures the first and second series of helical springs to one another.

7. The double wet clutch mechanism (1) as claimed in the preceding claim, in which the first and second annular plates (62, 72) are retained axially on the common bearing plate (17) by snap-fastening means (18, 19).

8. The double wet clutch mechanism (1) as claimed in any one of claims 1 to 7, in which the first and second clutches (E1, E2) bear on the control system (100) via force transmission members (65, 75).

9. The double wet clutch mechanism (1) as claimed in the preceding claim, in which the second elastic return device (70) is arranged radially beyond the first elastic return device (60).

10. The double wet clutch mechanism (1) as claimed in the preceding claim, in which the first force transmission member (65) passes through the second force transmission member (75) so as to bear on the first annular plate.

11. The double wet clutch mechanism (1) as claimed in the preceding claim, in which bearing tabs (66) formed on the first force transmission member (65) pass through orifices (76) made in the second force transmission member (75).

12. The double wet clutch mechanism (1) as claimed in any one of the preceding claims, in which the control system (100) comprises an axially extending bearing surface (140) extending in the direction of the input disk-carrier (10), the guide bearing (80) being arranged radially outside the axially extending bearing surface.

13. The double wet clutch mechanism (1) as claimed in any one of the preceding claims, in which the first and second elastic return devices (60, 70) are housed in a recess (15) formed in the input disk-carrier (10).

14. The double wet clutch mechanism (1) as claimed in any one of claims 1 to 8, in which the first elastic return device (60) is arranged radially beyond the second elastic return device (70).

15. The double wet clutch mechanism (1) as claimed in any one of claims 1 to 3, in which each of the first and second elastic return devices (60, 70) is formed by an annular elastic washer.
